# EUROPÄISCHE PATENTSCHRIFT

(11) **EP 0 740 920 B1**
(45) Veröffentlichungstag und Bekanntmachung des Hinweises auf die Patenterteilung: **20.01.1999**
(21) Anmeldenummer: 96106857.4
(22) Anmeldetag: 30.04.1996
(51) Int. Cl.: A47J 36/14, A47J 27/00

(54) **Pfanne oder Kasserolle mit einem Überlaufrand**
Pan or vessel with a pouring edge
Poêle ou récipient avec un bord à vesser

(30) Priorität: 05.05.1995 IT MI950309
(43) Veröffentlichungstag der Anmeldung: 06.11.1996
(73) Patentinhaber: BALLARINI PAOLO & FIGLI S.p.A., 46017 Rivarolo Mantovano (MN) (IT)
(72) Erfinder: Ferron, Francesco, 26041 Casalmaggiore (IT)
(74) Vertreter: Mayer, Hans Benno, Dipl.-Ing.

(56) Entgegenhaltungen:
- CH-A- 440 611
- FR-A- 711 416
- FR-A- 742 741
- FR-A- 917 689
- US-A- 3 145 887
- US-A- 3 984 024

## Beschreibung

Die vorstehende Erfindung betrifft eine Pfanne oder Kasserolle, die mit einem Überlaufrand versehen ist.

Es sind bereits Kochgefässe bekannt geworden, die einen lippenartigen Umfangsrand aufweisen, um mit diesem Rand zu erreichen, dass sich der Flüssigkeitsstrom während des Ausgiessvorganges von der Gefässwand ablöst.

Die bekannten Kochgefäße weisen den Nachteil auf, dass während des Ausgiessvorganges einer Flüssigkeit, diese in Form eines turbulenten Flüssigkeitsstromes aus dem Inneren des Gefässes austritt mit dem Nachteil, dass der Flüssigkeitsstrom nicht kontrollierbar ist und Flüssigkeitsverluste, Spritzer oder ähnlich unerwünschte Nebeneffekte auftreten und dass ferner die Schaffung des Überlaufrandes in Bezug auf den inneren Durchmesser des zylinderförmigen Kochbehälters und bei vergleichbarem Volumen einen grösseren Durchmesser und daher einen grösseren Platz- und Materialbedarf gegenüber der zylindrischen Form von Kochgefässen erfordert.

Aus (D1) CH-PS 440.611 ist ein Kochgefäß aus dünnem Stahlblech bekannt geworden, das an der Oberseite einen zur Außenseite des Kochgefäßes hin abgebogenen, umlaufenden Ausgießrand aufweist.

Unterhalb des Ausgießrandes ist eine in das Behälterinnere ragende und sich in Umfangsrichtung des Gefäßes erstreckende Verformung vorgesehen, die eine Umfangsrille definiert.

Diese Verformung bildet im Inneren des Kochgefäßes eine umlaufende, vorspringende Rippe.

Der Ausgießrand des bekannten Kochgefäßes ist auf einem Umfang des Gefäßes angeordnet, der größeren Durchmesser aufweist als der Durchmesser der zur Innenseite des Kochgefäßes hinverformten Nute.

Aus diesem Grunde ist die vom Stand der Technik her bekannte Umfangsnute nicht dazu geeignet, vom Ausgießrand des Gefäßes abtropfende Flüssigkeitsmengen aufzunehmen. Ablaufende Flüßigkeitsmengen können frei und ungehindert auf die Ebene einer Wärmequelle fallen.

Aufgabe der vorstehenden Erfindung ist es, ein Kochgefäss mit einem Überlaufrand vorzuschlagen, das die vorgenannten Nachteile nicht aufweist, das einfach herstellbar und auf einfache Weise zu reinigen ist.

Diese Aufgabe wird erfindungsgemäß mit einer Pfanne oder einer Kasserolle gelöst, die die Merkmale des Patentanspruches 1 aufweist.

Das so ausgebildete Kochgefäss weist den Vorteil auf, dass in dem Moment, in dem das Kochgefäss zum Ausgiessen einer Flüssigkeit geneigt wird, von einem Teil der geneigten Umfangsfläche eine Ausflusszone gebildet wird, die sich in der gleichen Lageanordnung wie der Flüssigkeitsfluss befindet, d.h. parallel oder fast parallel zu der Fläche, die vom Flüssigkeitsspiegel im geneigten Kochgefäss gebildet wird.

Somit erlaubt die geneigt angeordnete innere Umfangsfläche des Kochgefässes ein kontrolliertes Auslaufen der Flüssigkeit in Form einer laminaren Strömung aus dem Kochgefäss.

Die aussenliegende Umfangsnute ist dazu geeignet, den Flüssigkeitsfilm, der u.U. an der Aussenseite der Gefässwand abfliesst, aufzunehmen und ein Abfliessen der Flüssigkeit nach unten zu vermeiden.

In einer bevorzugten Ausführungsform ist die geneigt ausgebildete Fläche derartig angeordnet, dass sie einen Winkel zwischen 20° und 40° gegenüber der oberen Fläche des Kochgefässes einschliesst.

In vorteilhafter Weise weist der Giessrand an seiner Oberseite eine sich in Umfangsrichtung erstreckende Anfasung auf, die unmittelbar im Anschluss an die geneigt ausgebildete Fläche angeordnet ist.

Der Giessrand weist in bevorzugter Weise eine aussenliegende Anfasung oder einen abgerundeten Übergang auf.

In vorteilhafter Weise sind die zwei sich gegenüberliegenden Wände der Umfangsnute nach aussen hin divergent angeordnet.

In vorteilhafter Weise ist das Kochgefäss aus Aluminium hergestellt.

Die Erfindung wird nun genauer anhand einiger Ausführungsbeispiele beschrieben und in den Zeichnungen dargestellt.
Fig. 1 zeigt das Kochgefäss im Schnitt und in Gebrauchslage;
Fig. 2 zeigt das Kochgefäss im Schnitt während des Ausgiessvorganges einer Flüssigkeit;
Fig. 3 zeigt ein Detail des Kochgefässes mit einem Kochlöffel, der an der Innenwand des Gefässes anliegt;
Fig. 4 zeigt ein Detail des Kochgefässes versehen mit einem Deckel; und
Fig. 5 zeigt ein Detail (V) gemäss Fig. 1.

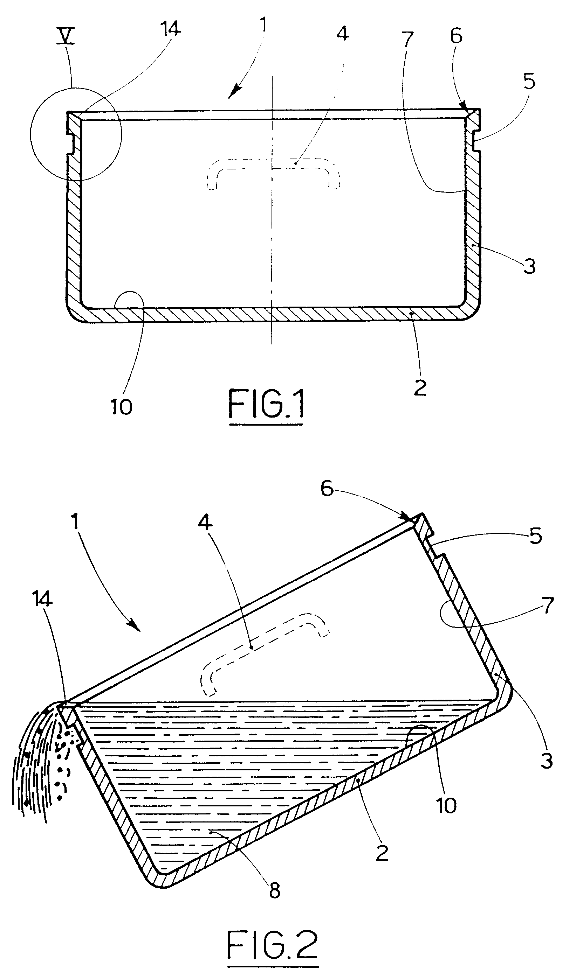

Figur 1 zeigt ein Kochgefäss, das gesamthaft mit 1 bezeichnet ist und einen Boden 2 und eine verhältnismässig dicke Wand 3 aufweist, die im dargestellten Beispiel zylinderförmigen Verlauf hat.

Das Kochgefäss 1, dessen Henkel 4 mit gestrichelter Linie dargestellt ist, ist erfindungsgemäss mit einem Ausgiessrand 6 versehen, der von einer Umfangsfläche gebildet wird, die zur Innenseite des Kochgefässes 1 geneigt angeordnet ist.

Diese geneigte Umfangsfläche begrenzt eine kegelstumpfartig ausgebildete Fläche.

Der kleinere Durchmesser der geneigt angeordneten Fläche ist in Übereinstimmung mit der Innenfläche 7 der Wand 3 vorgesehen.

Erfindungsgemäss ist das Kochgefäss 1 an der Aussenfläche seiner Wand mit einer Umfangsnute 5 versehen.

Die Nute 5 kann rechteckigen Querschnitt aufweisen, d.h. mit zwei sich gegenüberliegenden parallel angeordneten Wänden.

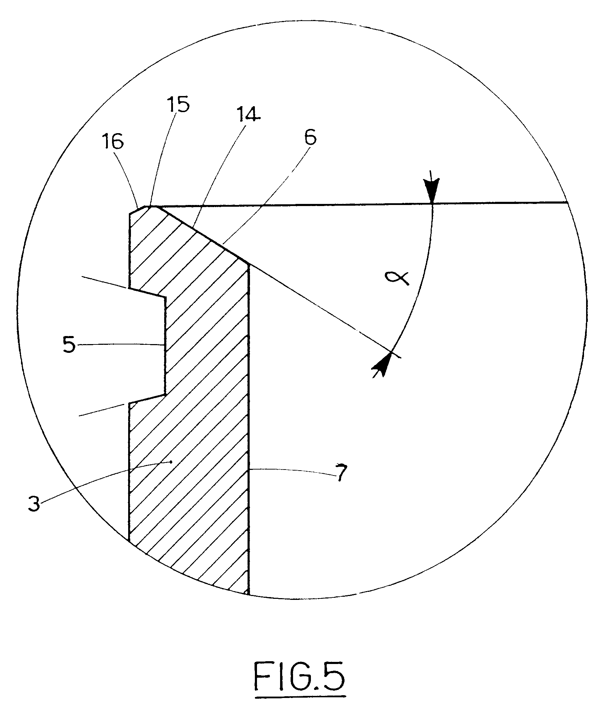

Im dargestellten Ausführungsbeispiel sind die beiden Wände der Nute 5 nach aussen hin auseinanderlaufend angeordnet (siehe auch Figur 5).

Die Nute 5 ist in vorteilhafter Weise in der Nähe des Randes 6 angeordnet.

Figur 2 zeigt das Kochgefäss 1 zusammen mit der Flüssigkeit 8 in Auslaufstellung. Es ist erkennbar, dass der Auslaufvorgang der Flüssigkeit 8 aus dem Kochgefäss 1 durch Vorsehung der geneigten Fläche des Randes 6 vereinfacht wird. Der Winkel α der geneigt angeordneten Fläche entspricht einem Wert zwischen 20° und 40°, in vorteilhafter Weise entspricht dieser Winkel einem Wert von 30° gegenüber der quer angeordneten imaginären Ebene, die durch die umlaufende Kante des Kochgefässes 1 (siehe auch Fig. 5) definiert ist. Es ist ferner deutlich erkennbar, wie die Flüssigkeit beim Ausgiessen sich von der oberen Kante des Kochgefässes ablöst.

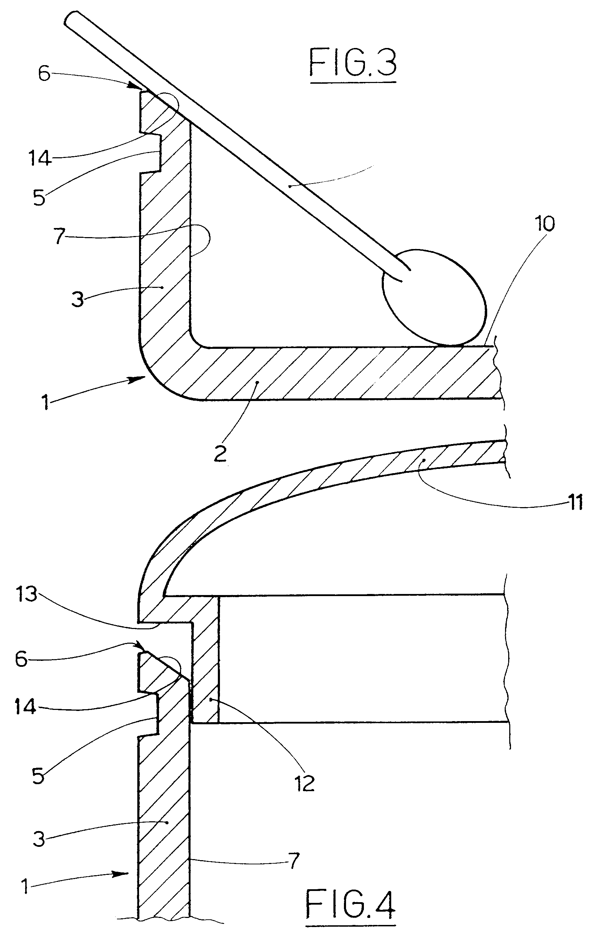

Figur 3 zeigt das Kochgefäss 1 mit einem Kochlöffel 9, der an der Randfläche 6 anliegt. Es ist erkennbar, dass der Stiel des Kochlöffels 9 mit der geneigten Fläche der Randzone 6 in Berührung steht.

In Figur 4 ist das Kochgefäss 1 entsprechend der Erfindung mit einem Deckel 11 dargestellt. Dieser Deckel 11 weist einen inneren Umfangsrand 12 auf, der nach unten gerichtet ist. Die Aussenfläche des Umfangsrandes 12 des Deckels entspricht der Innenfläche 7 der Wand 3.

Für den Fall, dass der innere Umfangsrand 12 des Deckels 11 vollständig in den Raum des Kochgefässes 1 eingeführt wird, tritt eine Abdichtfläche 13 des Deckels 11 in Wirkverbindung mit dem oberen Teil, d.h. mit dem äusseren Teil des Randes 6 des Kochgefässes 1.

Der äussere Durchmesser der Fläche 13 entspricht dem Aussendurchmesser des Deckels 11.

Figur 5 zeigt ein bevorzugtes Ausführungsbeispiel des Kochgefässes 1 gemäss der vorstehenden Erfindung. Man kann erkennen, dass der Rand 6 eine sich in Umfangsrichtung erstreckende Anfasung 15 aufweist, die neben der geneigt angeordneten Fläche 14 angeordnet ist. Ferner weist der Rand 6 eine äussere Anfasung 16 auf, die auch abgerundet ausgebildet sein kann. Die Nute 5 weist in vorteilhafter Weise, wie in der Zeichnung dargestellt, zwei nach aussen auseinanderlaufende Wände auf.

Sofern das Kochgefäss 1 zum Ausgiessen einer Flüssigkeit 8 geneigt wird, wie in Fig. 2 dargestellt, bildet ein Teil der geneigt angeordneten Fläche 14 des Randes 6 eine Auslaufzone, die parallel zum Flüssigkeitsstrom gerichtet ist, d.h. parallel oder fast parallel gegenüber dem Flüssigkeitsspiegel, der von der Flüssigkeit 8, im geneigten Gefäss 1, gebildet wird. Somit erleichtert die geneigt angeordnete Fläche 14 ein kontrolliertes Auslaufen in Form einer laminaren Strömung der Flüssigkeit 8 aus dem Gefäss 1.

Gleichzeitig wird der Flüssigkeitsstrom von der Wand 3 abgelöst, dies unter Zuhilfenahme der durch den Rand 6 definierten Kante. Für den Fall, dass ein Teil der auslaufenden Flüssigkeit 8 bestrebt sein sollte, als Film entlang der Aussenfläche der Wand 3 in Richtung auf den Boden 2 zu laufen, erfolgt durch die Nute 5 eine sicher Unterbrechung dieses Flüssigkeitsstromes, der an der oberen Kante zur Nute 5 umgelenkt wird.

Die Nute 5, die erfindungsgemäss vorgeschlagen worden ist, vermeidet es, dass z.B. eine Gasflamme vom Flüssigkeitsstrom, der an der Aussenfläche des Kochgefässes 1 abläuft, von diesem beeinflusst oder durch den Flüssigkeitsstrom gelöscht wird.

Bei Einsatz eines Kochlöffels 9 wird der Vorteil erzielt, dass der Stiel des Kochlöffels an der geneigten Fläche 14 des Randes 6 oder an der Kante des Randes 6 angeliegt. Dies hat seine Bedeutung dann, wenn die Innenflächen 7 und 10 z.B. mit einer Antihaftschicht beschichtet sind. Durch die Vorsehung der geneigten Fläche 14 des Randes 6 wird vermieden, dass der Kochlöffel 9 oder ganz allgemein ein Küchenwerkzeug während seiner Verwendung die Antihaftschicht in der Nähe des Randes 6 beschädigt, wie dies z.B. bei einem Kochgefäss mit einem eingerollten Lippenrand der Fall wäre, der beschichtet ist und daher beschädigbar wäre.

Die Ausführungsform des erfindungsgemässen Kochgefässes führt neben der Vermeidung eines lippenartig ausgebildeten Randes zu folgenden weiteren Vorteilen:
es bedarf einer geringeren Materialmenge zur Herstellung des Kochgefässes bei gleichem Kochvolumen, d.h. bei gleicher Höhe und bei gleichem Durchmesser des Kochgefässes.

Es wird eine bessere Abdichtung zwischen Deckel und Umfangsrand des Kochgefässes erreicht.

Die Abmessungen des Kochgefässes können vermindert werden, wodurch Verpackungskosten und Versandkosten eingespart werden können. Ferner wird die Stapelbarkeit und das Verstauen der erfindungsgemässen Kochgefässe in der Küche vereinfacht.

Bei Verwendung einer Antihaftbeschichtung ist der obere Rand vor Beschädigung geschützt.

Es bietet sich die Möglichkeit einer neuen Formgestaltung und zusätzlicher ästhetischer Effekte aufgrund der Gleichmässigkeit des Kochgefässes;
verschiedene Ausführungsformen des Gefässkörpers sind bei der mechanischen Bearbeitung des Gefässes möglich.

Es wird somit der Vorteil erzielt, dass die Fertigung des Kochgefässes wesentlich vereinfacht wird, da kein zusätzlicher Bearbeitungsvorgang zur Herstellung des Randes in Form eines lippenartig gerollten Vorsprunges notwendig ist. Das Kochgefäss, das in vorteilhafter Weise aus Aluminium hergestellt ist, kann auf einfache Weise durch ein Tiefziehverfahren hergestellt werden, wobei der Rand und die in Umfangsrichtung verlaufende Nut durch einfache Bearbeitung auf einer Drehmaschine herstellbar sind.

Dadurch wird die Möglichkeit geschaffen, unabhängig von der Dicke der Wand des Kochgefässes einen Überlaufrand zu schaffen, der keine abstehende, lippenartige Verdichtung aufweist. Die Wand des Kochgefässes kann unterschiedliche geometrische Formen aufweisen, z.B. abgerundeten Verlauf oder in Axialrichtung konisch ausgebildete oder ovale Form. Die Ausbildung des sich gegenüberliegenden Wände der Nute 5 in mit nach aussen auseinanderlaufender Anordnung, vereinfacht den Reinigungsvorgang der Nute 5, z.B. bei einem Waschvorgang in einer Geschirrspülmaschine.

Der Schutzumfang der vorstehenden Erfindung beschränkt sich nicht nur auf Pfannen und Kasserollen, sondern umfasst auch andere Kochgefässe, die einen Giessrand und/oder eine Umfangsnut zum Aufnehmen überlaufender Flüssigkeit aufweist.

## Patentansprüche

1. Pfanne oder Kasserolle (1) mit einem Ausgießrand (6), der von einer zur Innenseite des Kochgefäßes (1) hin geneigt angeordneten und eine kegelstumpfartige Fläche begrenzenden Umfangsfläche (14) definiert ist, und wobei unterhalb der geneigten Umfangsfläche (14) die Wand (3) des Kochgefäßes (1) mit einer sich in Umfangsrichtung des Kochgefäßes (1) erstreckenden Nute (5) versehen ist
**dadurch gekennzeichnet,**
daß die Innenfläche (7) der Gefäßwand (3) als glatte Wand ausgeführt ist,
daß der Außendurchmesser, am oberen Rand (6) des Kochgefäßes (1) gemessen, gleich dem Außendurchmesser des Kochgefäßes (1) am Boden (2) gemessen ist, daß
daß der geneigte Ausgießrand (6, 14) sich über die Dicke der Wand (3) des Kochgefäßes (1) erstreckt und, daß
die Tiefe der Umfangsnute (5) in der Außenwand geringer als die Dicke der Gefäßwand (3) bemessen ist.

2. Kochgefäss, nach Patentanspruch 1, **dadurch gekennzeichnet**, dass die geneigte Fläche (14) einen Winkel (α) zwischen 20° und 40° gegenüber der sich in Querrichtung erstreckenden Ebene des Kochgefässes (1) umfasst.

3. Kochgefäss, nach Patentanspruch 1, **dadurch gekennzeichnet**, dass der Ausgiessrand (6) eine sich in Umfangsrichtung erstreckende Anfasung (15) aufweist, die neben der geneigten Fläche (14) angeordnet ist.

4. Kochgefäss, nach Patentanspruch 1, **dadurch gekennzeichnet**, dass der Ausgiessrand (6) eine aussenliegende Anfassung (16) oder ein abgrundetes Anschlussteil aufweist.

5. Kochgefäss, nach Patentanspruch 1, **dadurch gekennzeichnet**, dass die sich gegenüberliegenden Wände der Umfangsnut (5) parallel zueinander angeordnet sind.

6. Kochgefäss, nach Patentanspruch 1, **dadurch gekennzeichnet**, dass die sich gegenüberliegenden Wände der Umfangsnute (5) zur Aussenseite des Kochgefässes auseinanderlaufend angeordnet sind.

7. Kochgefäss, nach Patentanspruch 1, **dadurch gekennzeichnet**, dass das Kochgefäss (1) aus Aluminium hergestellt ist.

## Claims

1. Pan or casserole (1) having a pouring edge (6) which is defined by a circumferential surface (14) which is arranged inclined towards the inside of the cooking vessel (1) and bounds a truncated surface, and below the inclined circumferential surface (14) the wall (3) of the cooking vessel (1) being provided with a groove (5) extending in the circumferential direction of the cooking vessel (1), characterized in that the inner surface (7) of the vessel wall (3) is designed as a smooth wall, in that the outside diameter, calculated at the upper edge (6) of the cooking vessel (1), is calculated such that it is equal to the outside diameter of the cooking vessel (1) at the bottom (2), in that the inclined pouring edge (6, 14) extends over the thickness of the wall (3) of the cooking vessel (1), and in that the depth of the circumferential groove (5) in the outside wall is dimensioned such that it is smaller than the thickness of the vessel wall (3).

2. Cooking vessel according to patent Claim 1, characterized in that the inclined surface (14) encompasses an angle (α) of between 20° and 40° with respect to that plane of the cooking vessel (1) which extends in the transverse direction.

3. Cooking vessel according to patent Claim 1, characterized in that the pouring edge (6) has a bevel (15) which extends in the circumferential direction and is arranged next to the inclined surface (14).

4. Cooking vessel according to patent Claim 1, characterized in that the pouring edge (6) has an external bevel (16) or a rounded connecting part.

5. Cooking vessel according to patent Claim 1, characterized in that the opposite walls of the circumferential groove (5) are arranged parallel to each other.

6. Cooking vessel according to patent Claim 1, characterized in that the opposite walls of the circumferential groove (5) are arranged such that they diverge towards the outside of the cooking vessel.

7. Cooking vessel according to patent Claim 1, characterized in that the cooking vessel (1) is made of aluminium.

## Revendications

1. Poêle ou casserole (1) avec un bord à verser (6) qui est défini par une surface périphérique (14) inclinée vers le côté intérieur du récipient de cuisson (1) et délimitant une surface tronconique et où, on dessous de la surface périphérique inclinée (14), la paroi (3) du récipient de cuisson (1) est pourvue d'une rainure (5) s'étendant dans la direction périphérique du récipient de cuisson (1), **caractérisée en ce** que la surface intérieure (7) de la paroi de récipient (3) est réalisée sous forme de paroi lisse, en ce que le diamètre extérieur, mesuré au bord supérieur (6) du récipient de cuisson (1), est égal au diamètre extérieur du récipient de cuisson (1) mesuré ou fond (2), en ce que le bord à verser incliné (6, 14) s'étend sur l'épaisseur de la paroi (3) du récipient de cuisson (1) et en ce que la profondeur de la rainure périphérique (5) dans le paroi extérieure est fixée pour être plus petite que l'épaisseur de la paroi de récipient (3).

2. Récipient de cuisson selon la revendication 1, **caractérisé en ce** que la surface inclinée (14) forme un angle (α) entre 20° et 40° par rapport au plan du récipient de cuisson (1) s'étendant dans la direction transversale.

3. Récipient de cuisson selon la revendication 1, **caractérisé en ce** que le bord à verser (6) présente un chanfrein (15) s'étendent dans la direction périphérique qui est disposé à côté de la surface inclinée (14).

4. Récipient de cuisson selon la revendication 1, **caractérisé en ce** que le bord à verser (6) présente un chanfrein (16) situé à l'extérieur ou une partie de raccordement arrondie.

5. Récipient de cuisson selon la revendication 1, **caractérisé en ce** que les parois opposées de la rainure périphérique (5) sont disposées parallèlement l'une à l'autre.

6. Récipient de cuisson selon la revendication 1**, caractérisé en ce** que les parois opposées de la rainure périphérique (5) sont disposées pour diverger vers le côté extérieur du récipient de cuisson.

7. Récipient de cuisson selon la revendication 1, **caractérisé en ce** que le récipient de cuisson (1) est réalisé en aluminium.
